# EUROPÄISCHE PATENTANMELDUNG

(11) **EP 3 851 493 A1**
(43) Veröffentlichungstag der Anmeldung: **21.07.2021**
(21) Anmeldenummer: 20152076.4
(22) Anmeldetag: 15.01.2020
(51) Int. Cl.: C08L 61/06, C08G 8/36, C08G 8/10

(54) **ZUSAMMENSETZUNG ENTHALTEND EINEN NOVOLAK**

(71) Anmelder: Hexion GmbH, 58642 Iserlohn-Letmathe (DE)
(72) Erfinder: Schröter, Stephan, 45259 Essen (DE)

(57) **Zusammenfassung**

Die Erfindung bezieht sich auf eine Zusammensetzung enthaltend einen Novolak und Wasser.

Um Novolake in einer flüssigen Aufbereitung bereitzustellen, die aufgrund ihrer Viskosität eine unkomplizierte Verarbeitung bei Temperaturen < 100 °C ermöglichen, wird eine Zusammensetzung vorgeschlagen, die einen Novolak und Wasser enthält, wobei
a) der prozentuale Anteil der ortho-Verknüpfungen der Phenolkerne des Novolaks größer ist als die der para-Verknüpfungen und
b) der Novolak hergestellt ist aus einer phenolischen Verbindung und einem Aldehyd in einem molaren Verhältnis von 1 : 0,2 bis 1: 0,45 und
c) die Zusammensetzung 2 bis 20 Gew.% Wasser bezogen auf das Gewicht der Summe aus Novolak und Wasser enthält.

## Beschreibung

Die Erfindung betrifft eine Zusammensetzung enthaltend einen Novolak und Wasser.

Novolake sind aus dem Stand der Technik hinlänglich bekannt. So werden sie hergestellt durch Kondensationsreaktion von phenolischen Verbindungen wie z.B. Phenol, Kresolen, Xylenolen, Bisphenolen, Resorcin, Brenzcatechin, Hydrochinon und/oder Naphtholen und dergleichen, einschließlich Mischungen derselben mit Aldehyden, wie z. B. Formaldehyd oder Acetaldehyd in einem Verhältnis 1:0,2 bis 1:0,91 unter Verwendung eines sauren Katalysators. Je nach Reaktionsbedingungen und Katalysator entstehen Novolake mit unterschiedlicher Anzahl an verknüpften Phenolkernen sowie mit verschiedenen Isomerengemischen, die Einfluss auf die Eigenschaften des Produktes haben.

Novolake sind im allgemeinen feste Produkte mit einem Erweichungspunkt von 30 °C bis 160 °C und einer Molekularmasse Mₙ von 220 bis 1200 g/mol. Entsprechend ihren Eigenschaften werden Novolake für unterschiedlichste Anwendungen wie z.B. Beschichtungen, Klebstoffe, Schleifmittel, Laminate, Gießharze, Friktionsmaterialien, Pressmaterialien, feuerfeste Materialien und Holzverbundstoffe eingesetzt.

Besteht allerdings die Anforderung, den Novolak in flüssigem Zustand einzusetzen, sind der Anwendung aufgrund des Erweichungspunktes des Novolaks und der vorliegenden Viskosität Grenzen gesetzt. So bringt die Verarbeitung von heißen Harzschmelzen in der Regel eine aufwendige Prozessführung, bei der insbesondere arbeitsschutztechnische Anforderungen berücksichtigt werden müssen, mit sich, so dass die Verwendung von Novolakenschmelzen letztendlich eingeschränkt ist.

In der Vergangenheit gab es Bestrebungen, dieses Problem durch die Zugabe von Novolak in Form von Emulsionen oder Dispersionen zuzugeben. So ist aus der EP 0 084 681 B1 und US 4,788,236 bekannt, dem Novolakharz vor, während oder nach der Kondensationsreaktion Wasser zuzusetzen, wobei die Novolak-Harzdispersion durch die Zugabe einer wirksamen Menge an Schutzkolloiden gebildet wird.

Weiterhin beschreibt die DE-OS-28 04 362 die Herstellung von Phenolharzdispersionen durch Vermischen von festem Phenolharz, Wasser, einem organischen Kupplungsmittel und Polyvinylalkohol.

In der US 5670571 ist die Herstellung von wässrigen Phenolharzdispersionen als Binder für Isolierungen basierend auf Glasfasern offenbart. Hierbei handelt es sich um die Verwendung von Novolakdispersionen, bei denen Schutzkolloide zur Stabilisierung der Novolakharzteilchen zugesetzt werden.

Allerdings ist aber der Zusatz von Kupplungsmittel und Schutzkolloiden für viele Anwendungen von wässrigen Novolaksystemen nachteilig, da sie in weiteren Verarbeitungsprozessen stören können. So bewirken viele Additive mit oberflächenaktiver Wirkung z.B. eine schlechte Benetzung von Substraten oder verhindern eine optimale Aufschäumung der Zusammensetzung unter Zusatz von Vernetzern (z.B. Diisocyanaten, Polyisocyanaten, Epoxidharzen, Phenolresolen) und Treibmitteln (z.B. Pentan, Isopentan).

Es ist daher Aufgabe der hier vorliegenden Erfindung, Novolake in einer flüssigen Aufbereitung bereitzustellen, die aufgrund ihrer Viskosität eine unkomplizierte Verarbeitung bei Temperaturen < 100 °C ermöglichen.

Gelöst wird diese Aufgabe erfindungsgemäß durch eine Zusammensetzung enthaltend einen Novolak und Wasser, wobei
a) der prozentuale Anteil der ortho-Verknüpfungen der Phenolkerne des Novolaks größer ist als die der para-Verknüpfungen und
b) der Novolak hergestellt ist aus einer phenolischen Verbindung und einem Aldehyd in einem molaren Verhältnis von 1 : 0,2 bis 1 : 0,45 und
c) die Zusammensetzung 2 bis 20 Gew.% Wasser bezogen auf das Gewicht der Summe aus Novolak und Wasser enthält.

Es war überraschend festzustellen, dass eine solche Zusammensetzung bei Temperaturen < 100 °C eine Viskosität von ca. 1000-5000 mPa*s (bei 60 °C) aufweist, die für viele Anwendungsgebiete geeignet ist, wobei auf den Zusatz von stabilisierenden Substanzen, wie z.B. Schutzkolloide, verzichtet werden kann. Besonders unerwartet war, dass die Zusammensetzung in Abhängigkeit von der Temperatur fast nahezu eine homogene und - besonders überraschend - eine lagerstabile Lösung bei Temperaturen zwischen 20 °C und 60 °C ist, die im Wesentlichen nicht zur Kristallisation oder Phasentrennung neigt. Durch die Bereitstellung der erfindungsgemäßen Zusammensetzung kann der Anwendungsbereich flüssiger Novolak-enthaltender wässriger Systeme bedeutend erweitert werden.

Der für die erfindungsgemäße Zusammensetzung verwendete Novolak weist einen prozentualen Anteil der ortho-Verknüpfungen der Phenolkerne des Novolaks auf, der höher ist als die der para-Verknüpfungen. In der Regel werden diese Novolake "high-ortho-Novolake" genannt, bei denen der ortho-Anteil zwischen 50 und 100 % beträgt.
Am Beispiel eines Phenol-Novolaks soll die Ermittlung des ortho-Anteils über die quantitative Untersuchung der Bisphenol F (BPF) Isomere näher erläutert werden:
Für die Ermittlung des ortho-Anteils einer Novolakes wird der Gehalt der drei Bisphenol F Isomere per HPLC bestimmt. Die einzelnen Gehalte werden auf 100 % normalisiert, so dass die Summe aller drei Isomeren 100 % beträgt. Der ortho-Anteil errechnet sich nun aus dem normalisierten o,o'-BPF Gehalt plus der Hälfte des normalisierten o,p-BPF Gehaltes. Der para-Anteil entsprechend aus dem normalisierten p,p'-BPF Gehalt plus der Hälfte des normalisierten o,p-BPF Gehaltes.

Diese ortho-Novolake werden z.B. erhalten, wenn die Kondensationsreaktion unter schwach sauren Bedingungen (pH 3 bis 7) in Gegenwart zweifach geladener Metallkationen durchgeführt wird. Der Anteil der ortho-Substitution steigt bei Verwendung von Metallhydroxiden der ersten und zweiten Hauptgruppe in folgender Reihe: K < Na < Li < Ba < Sr < Ca < Mg. Ausgeprägter ist der Effekt mit Ionen der Übergangsmetalle Fe, Cu, Cr, Ni, Co, Mn und Zn. Je größer die Neigung des Metallions zur Bildung von stabilen Chelat-Komplexen ist, desto größer ist auch der Grad an ortho-Substitution. Auch Borsäure zeigt aufgrund der Fähigkeit zur Komplexbildung einen stark ortho-dirigierenden Effekt. Üblicherweise werden Ca, Mg, Zn, Cd, Pb, Cu, Co, Ni -Salze der Essigsäure als Katalysator zur Herstellung von ortho-Novolaken verwendet. Diese ortho-kondensierten Novolake weisen u.a. eine erhöhte Reaktivität gegenüber Hexamethylentetramin auf.

Verfahren zur Herstellung von ortho-Novolaken sind aus dem Stand der Technik bekannt. So beschreibt die US 4097463 einen entsprechenden Prozess zur Herstellung von ortho-kondensierten Novolaken.

Eine andere Variante zur Bereitstellung von Novolaken mit hohem ortho-Anteil ist in der DE 1 645 217 genannt, in der ein Verfahren mit spezieller Druck- und Temperaturführung beschrieben ist.

Die Kondensationsreaktion zur Herstellung des für die erfindungsgemäße Zusammensetzung verwendeten Novolak findet zwischen einer phenolischen Verbindung und einem Aldehyd in einem molaren Verhältnis von 1 : 0,2 bis 1: 0,45 statt. Im Allgemeinen wird die phenolische Verbindung ausgewählt aus Phenol, Kresol, Xylenol, Bisphenol, Resorcin, Brenzcatechin, Hydrochinon, Naphthol und dergleichen, einschließlich Mischungen derselben. In der Regel wird als Aldehyd wässriges Formaldehyd, Paraformaldehyd und/oder Trioxan verwendet.

Die gebräuchlichsten Ausgangsmaterialien sind Phenol und wässriges Formaldehyd. Diese Ausgangsmaterialien werden meist wegen ihrer guten Reaktionsfähigkeit, der Verfügbarkeit und der geringen Kosten ausgewählt.

Wie bereits erwähnt, wird für die Herstellung der erfindungsgemäßen Zusammensetzung ein Novolak verwendet, bei dessen Herstellung ein molares Verhältnis der phenolischen Verbindung zum Aldehyd 1 : 0,2 bis 1 : 0,45, bevorzugt 1 : 0,25 bis 1: 0,4, gewählt wird. Dieses Verhältnis führt zu einem niedermolekularen Novolak (Mₙ von 210 - 400 g/mol (ermittelt per GPC und Dampfdruckosmometrie), der in seiner Eigenschaft meist eine klebrige Masse darstellt. Werden höhere Anteile an Aldehyd verwendet, wird die Viskosität des erhaltenen Novolaks zu hoch und die Wasserverträglichkeit reduziert, so dass keine weitgehend homogene und lagerstabile Mischung erhalten wird, wobei jedes für sich genommen, nachteilig für die weitere Verarbeitung ist.

Des Weiteren enthält die erfindungsgemäße Zusammensetzung 2 bis 20 Gew.% Wasser bezogen auf das Gewicht der Summe aus Novolak und Wasser. Bei geringeren Wasseranteilen (< 2 Gew.%) ist keine ausreichende Flüssigkeitsmenge vorhanden, um den Novolak in Lösung zu bringen und eine reduzierte Verarbeitungsviskosität zu erzielen. Bei Anteilen größer 20 Gew.% Wasser setzt sich das Wasser über den Novolak bei den gewünschten Verarbeitungstemperaturen ab. Besonders bevorzugt ist ein Wasseranteil von 2 bis 15 Gew.%, bei dem eine weitgehend mischbare und lagerstabile Zusammensetzung erhalten wird, wobei wiederum 2 bis 9 Gew.% Wasser bevorzugt ist, die ein optimale Zusammensetzung hinsichtlich Mischbarkeit und Lagerstabilität ergibt.

Überraschend bei der Verwendung der angegebenen Wassermengen ist, dass die Zugabe eines Schutzkolloides (wie z.B. hochmolekulare Substanzen, wie z.B. Polysaccharide, Proteine, Polyacrylate), das ein Zusammenklumpen fester Partikel in einer flüssigen homogenen Phase vermeiden soll, nicht erforderlich ist. Insbesondere bei höheren Wasseranteilen (> ca. 10 Gew.%) war dies nicht zu erwarten, was auf die Verwendung des speziellen Novolaks in der erfindungsgemäßen Zusammensetzung, zurückzuführen ist.

Als weitere Zusatzstoffe kann die erfindungsgemäße Zusammensetzung weitere Komponenten enthalten, beispielweise wären Ammoniumborate, Ammoniumphosphate, Ammoniumsulfat, Organophosphor-Substanzen, Zinkborat, Aluminiumhydroxid, Magnesiumhydroxid als Flammschutzmittel denkbar.

Insbesondere ist es von Vorteil, der erfindungsgemäßen Zusammensetzung als weitere Komponente ein oder mehrere Lösungsmittel (z.B. 1-10 Gew. % bezogen auf alle Komponenten der erfindungsgemäßen Zusammensetzung) zuzusetzen, wodurch die Viskosität über ein breites Spektrum in Abhängigkeit von der Temperatur beeinflusst werden kann, was den Anwendungsbereich der erfindungsgemäßen Zusammensetzung erheblich erweitert. Gleichzeitig wurde ein positiver Einfluss des Lösungsmittels und dessen Menge auf die Lagerstabilität der Zusammensetzung beobachtet. Besonders bevorzugt ist, wenn das Lösungsmittel ausgewählt ist aus z.B. Triethylphosphat; Tris(2-chlorisopropyl)phosphat (TCPP); Benzylalkohol; dibasische Ester von Säuren wie Diethyladipat, Dimethyladipat, Diethylsuccinat oder Dimethylsuccinat; Ethylenglykol; Diethylenglykol und weiteren Diolen oder Glykolethern und/oder Mischungen hieraus. Besonders bevorzugt ist die Verwendung von Diethylenglykol, weil sowohl die Viskosität der erfindungsgemäßen Zusammensetzung bereits bei niedrigen Temperaturen als auch die Lagerstabilität über einen längeren Zeitraum (4 Monate) auf dem gewünschten hohen Niveau lagen. Die Zugabe des Lösungsmittels kann zum Novolak, zum Novolak/Wasser-Gemisch oder auch zum Wasser erfolgen.

Die erfindungsgemäße Zusammensetzung enthaltend einen Novolak und Wasser kann durch ein Verfahren folgende Schritte enthaltend, hergestellt werden:
a) Herstellung eines Novolaks bei dem der prozentuale Anteil der ortho-Verknüpfungen der Phenolkerne größer ist als die der para-Verknüpfung durch Kondensation einer phenolischen Verbindung und einem Aldehyd in einem Verhältnis 1 : 0,2 bis 1: 0,45
b) Vermischen des unter a) hergestellten Kondensates mit 2 bis 20 Gew.% Wasser bezogen auf das Gewicht der Summe aus Novolak und Wasser bei Temperaturen zwischen 80 und 100 °C zur Herstellung der Zusammensetzung.

In einem typischen Verfahren zur Herstellung eines herkömmlichen o-Novolaks werden das Phenol und der Katalysator (z.B. Zinkacetat) z.B. in einer Menge von 0,15 - 1 % bezogen auf phenolische Komponente innig gemischt. Der Formaldehyd wird im angegebenen Verhältnis zum Phenol portionsweise oder kontinuierlich über einen festgelegten Zeitraum bei einer Temperatur von 70 bis 110 °C hinzugegeben. Die Umsetzung erzeugt Wärme, so ist oftmals Kühlen erforderlich. Sobald die anfängliche Exothermie abgeschlossen ist, wird das Gemisch erwärmt, um die Umsetzung der beiden Komponenten zu vervollständigen. Das Reaktionsgemisch wird unter Wärme und Vakuum teilentwässert und es erfolgt eine weitere Kondensation bei ca. 130 °C für 1-3 h, um den o-Novolak in der gewünschten Zusammensetzung zu isolieren. Der so hergestellte o-Novolak ist bei Raumtemperatur ein klebriger Feststoff mit einer molaren Masse Mₙ von 210 bis 400 g/mol.

Die Herstellung der erfindungsgemäßen Zusammensetzung erfolgt in der Art, dass entweder der o-Novolak sofort nach dessen Herstellung zwischen 80 und 100 °C, bevorzugt 90 °C, mit Wasser unter Rühren versetzt wird. Es ist aber auch möglich den o-Novolak nach der Herstellung zu lagern und bedarfsgerecht zur Herstellung der erfindungsgemäßen Zusammensetzung aufzuschmelzen und unter Rühren die erforderliche Menge Wasser (2 bis 20 Gew.% bezogen auf das Gewicht der Summe aus Novolak und Wasser) zuzutropfen.

Die Zugabe weiterer Komponenten, wie z.B. Lösungsmittel oder Flammschutzmittel kann zum Novolak, zum Novolak/Wasser-Gemisch oder auch zum Wasser erfolgen.

Die erfindungsgemäße Zusammensetzung kann für viele Anwendungen verwendet werden. Durch die Bereitstellung einer in einem Temperaturbereich von 20 bis 80 °C lagerstabilen, d.h., im Wesentlichen nicht zur Kristallisation oder Phasentrennung neigende, und eine entsprechende Viskosität aufweisende wässrige Novolakzusammensetzung, werden verarbeitungstechnische Schranken überwunden.

Beispielsweise kann die erfindungsgemäße Zusammensetzung direkt und ohne zusätzlichen Destillationsaufwand zur Herstellung von Novolak-Poiyolen verwendet werden. Diese werden durch Umsetzung der erfindungsgemäßen Zusammensetzung mit z.B. Alkylenoxiden, wie z.B. Ethylenoxid und/oder Propylenoxid und/oder Butylenoxid, und/oder Alkylencarbonaten, wie z.B. Ethylencarbonat und/oder Propylencarbonat und/oder Butylencarbonat und/oder deren Mischungen, erzeugt. Denkbar sind aber auch andere Alkoxylierungsmittel. Die Verwendung der erfindungsgemäßen Zusammensetzung zur Herstellung von Novolak-Polyolen hat den Vorteil, dass das in der erfindungsgemäßen Zusammensetzung enthaltene Wasser bei der Alkoxylierungsreaktion zu Polyetherdiolen mitreagiert, wodurch die Viskosität des hergestellten Novolak-Polyols vorteilhaft reduziert wird.
Die Anwendungsbereiche dieser Novolak-Polyole können vielfältig sein. Insbesondere Polyurethan- und Phenolharz-Schaumanwendungen seien hier beispielhaft genannt.

So kann die erfindungsgemäße Zusammensetzung an sich und auch bereits weiterverarbeitet als Novolak-Polyol beispielsweise als Polyolkomponente mit Di- oder Poly-Isocyanaten zur Herstellung von Polyurethanen oder Polyisocyanurat basierten Polymeren dienen. Durch die Verwendung der erfindungsgemäßen Zusammensetzung werden Polymere mit erhöhter Flammfestigkeit, erhöhter Dimensionsstabilität, mit verbessertem Schaumbildungsprofil und reduzierter Exothermie erhalten.

Aufgrund der Lagerstabilität der erfindungsgemäßen Zusammensetzung kann sie der Produktion bedarfsgerecht zur Verfügung gestellt werden. Gleichzeitig kann auf Lager- und Transporttemperaturen sowie auf eine Prozessführung zwischen 100 und 150 °C - wie bei reinen Novolaken bisher üblich - verzichtet werden, da ein Aufschmelzen der Novolak-Komponente durch die Verwendung einer einfach dosierbaren und pumpfähigen wässrigen Novolakzusammensetzung bei z. B. 60 °C nicht mehr erforderlich ist. Damit wird die Handhabung und Reaktionsführung vereinfacht, wodurch auch Probleme hinsichtlich Gesundheits- und Umweltschutz deutlich reduziert werden konnten.

Die mittels der erfindungsgemäßen Zusammensetzung hergestellten Polyurethanwerkstoffe können in Form von z. B. Präpolymeren, Schäumen (fest, flexibel), Beschichtungen, Lacken, Elastomeren, Klebstoffen, Dichtmitteln und/oder Kompositwerkstoffen verwendet werden. Besonders von Vorteil ist, wenn die erfindungsgemäße Zusammensetzung zur Herstellung von Polyurethanschäumen zum Einsatz kommt, da das in der erfindungsgemäßen Zusammensetzung enthaltene Wasser mit dem Isocyanat reagiert und Kohlendioxid als Treibmittel frei wird, wodurch auf die Zugabe weiterer Treibmittel verzichtet werden kann.

Aufgrund ihrer genannten Vorteile kann die erfindungsgemäße Zusammensetzung generell zur Herstellung von Beschichtungen, Lacken, Klebstoffen, Isolierstoffen, Schleifmaterialien, geformten Produkten, Bindemitteln, Laminaten und/oder feuerfesten Materialien verwendet werden.

Anhand eines Ausführungsbeispiels soll die Erfindung näher erläutert werden:
a) Herstellung des o-Novolaks (Verhältnis Phenol : Formaldehyd = 1 : 0,36)
   1. 179,72 kg Phenol werden als Feststoff in einen Reaktor gegeben und bei Temperaturen zwischen 55-65 °C aufgeschmolzen.
   2. 0,27 kg Zinkacetat-Dihydrat werden in 1,03 kg Wasser gelöst und anschließend unter Rühren zugegeben. Die Reaktionsmischung wird auf 100 °C-110 °C aufgeheizt.
   3. Danach werden 45,9 kg Formalin 45 % in 1 h bei 100 °C-110 °C zugegeben, woran sich eine Nachreaktion von 3 h unter Rückfluss anschließt.
   4. Es schließt sich eine Destillation unter Normaldruck bis 130 °C an.
   5. Es kann anschließend eine Haltephase von 2 h bei 130 °C erfolgen.
   6. Das Phenoldestillat wird unter weiteren Destillationsschritten wiedergewonnen.
   7. Zur Reduzierung des freien Phenolgehaltes (< 0,1 %) und Wassergehaltes (max. 0,1 %) wird das Produkt unter Wasserdampf und Vakuum bei Temperaturen zwischen 170 °C und 180 °C erneut der Destillation unterzogen.
      Stoffdaten des o-Novolaks:
      Viskosität Platte-Kegel bei 75 °C: 25600 mPa*s
      Viskosität Platte-Kegel bei 100 °C: 1040 mPa*s
      Wassergehalt nach Karl-Fischer: 0,13 %
      Molmasse (Mₙ) mittels GPC: 298 g/mol
      Molmasse (M_{w}) mittels GPC: 432 g/mol
b) Herstellung der erfindungsgemäßen Zusammensetzung (o-Novolak/Wasser-Gemisch mit 5,3 Gew.% Wasser)
   7. Bei 90 °C werden 5,3 kg Wasser 94,7 kg des unter a) hergestellten o-Novolaks 1 h lang zugesetzt.
   8. Das Produkt wird auf 60 ° C abgekühlt und über einen Filter abgelassen.
      Stoffdaten des o-Novolak-Wasser-Gemisches:
      Viskosität Platte-Kegel bei 50 °C: 20160 mPa*s
      Viskosität Platte-Kegel bei 60 °C: 4960 mPa*s
      Viskosität Platte-Kegel bei 75 °C: 920 mPa*s
      Wassergehalt nach Karl-Fischer: 5,47 %
      Molmasse (Mₙ) mittels GPC: 298 g/mol
      Molmasse (M_{w}) mittels GPC: 432 g/mol

In den Tabellen 1 und 2 wurde der Einfluss unterschiedlicher Wassermengen auf die Eigenschaften der erfindungsgemäßen Zusammensetzung untersucht, wobei in Tabelle 1 der o-Novolak entsprechend Vorschrift a) (Verhältnis Phenol : Formaldehyd = 1 : 0,36) hergestellt wurde und in Tabelle 2 das Verhältnis Phenol : Formaldehyd = 1 : 0,3 gewählt wurde. Die o-Novolak-Wasser - Gemische wurden entsprechend Vorschrift b) unter Verwendung der in der Tabelle 1 und 2 angegebenen Wassermengen bereitgestellt.

Die Viskositäten wurden nach der Platte Kegel Methode (ISO 2884-1) gemessen.
Die molare Masse wurde mittels Gelpermeationschromatographie bestimmt (GPC - handelsüblich, Trennsäulensatz: 6 Stück in Reihe, Säulenfüllung: quervernetztes Polystyrol, Eluent: THF, Detektor: UV 280 nm, Kalibriersubstanz: Phenol-Novolak).

**Tab. 1**

| | o-Novolak (1 : 0,36) + 5,3 Gew. % Wasser (I) | o-Novolak (1 : 0,36) + 7 Gew. % Wasser (II) | o-Novolak (1 : 0,36) + 10 Gew. % Wasser (III) |
|---|---|---|---|
| Viskosität 50 °C [mPa^{∗}s] | 20160 | 7200 | 2960 |
| Viskosität 60 °C [mPa^{∗}s] | 4960 | 2000 | 1100 |
| Viskosität 75 °C [mPa^{∗}s] | 920 | 570 | 320 |
| Viskosität 100 °C [mPa^{∗}s] | 170 | 230 | 50 |
| Wassergehalt [%] | 5,47 | 7,07 | 10,08 |
| Phenolgehalt [%] | 0,21 | 0,19 | 0,07 |
| pH in Aceton/Wasser | 5,87 | 6,14 | 6,16 |
| Molare Masse Mₙ [g/mol](GPC) | 298 | 307 | x |
| Molare Masse M_{w} [g/mol] (GPC) | 432 | 442 | x |

**Tab. 2**

| | o-Novolak (1 : 0,3) + 3,5 Gew. % Wasser (IV) | o-Novolak (1 : 0,3) + 7 Gew. % Wasser (V) | o-Novolak (1 : 0,3) + 10 Gew. % Wasser (VI) |
|---|---|---|---|
| Viskosität 50 °C [mPa^{∗}s] | 19200 | 3200 | 1160 |
| Viskosität 60 °C [mPa^{∗}s] | 4720 | 1320 | 400 |
| Viskosität 75 °C [mPa^{∗}s] | 920 | 320 | 170 |
| Viskosität 100 °C [mPa^{∗}s] | 160 | 80 | 45 |
| Wassergehalt [%] | 3,48 | 6,41 / 6,55 | 10,19 / 10,25 |
| Phenolgehalt [%] | 0,01 | 0,03 | 0,03 |
| pH in Aceton/Wasser | 6,52 | 6,28 | 6,34 |
| Molare Masse Mₙ [g/mol](GPC) | 267 | 274 | 267 |
| Molare Masse M_{w} [g/mol] (GPC) | 354 | 364 | 356 |

Werden beispielsweise die Viskositäten bei 60 °C der erfindungsgemäßen Zusammensetzungen (I) bis (VI) der Tabellen 1 und 2 mit dem reinen o-Novolak hergestellt in a) verglichen, so wird ersichtlich, dass bereits wenige Gewichtsprozent Wasser die Viskosität der erfindungsmäßen Zusammensetzungen in einem starken Maße senken.

Auch wurde festgestellt, dass bei 20 °C alle Zusammensetzungen (I) bis (VI) mind. 6 Monate stabil hinsichtlich ihres Kristallisationsverhaltens waren. Ebenso trat eine Wasserseparation nur sehr geringfügig auf, was die Einsatzfähigkeit und Handhabung der Zusammensetzungen nicht beeinträchtigte.

In der Tabelle 3 wurde der o-Novolak - wie unter a) dargestellt - hergestellt und mit 10 Gew.% Wasser sowie der angegebenen Menge (Gew.%) an entsprechendem Lösungsmittel bezogen auf das Gewicht der Summe aus Novolak, Wasser und Lösungsmittel (aller Komponenten) versetzt.

**Tab. 3: Gemisch o-Novolak/Wasser (10 Gew.%)/Lösungsmittel-Gemisch**

| | Lösungsmittel | Konzentration Lösungsmittel [Gew.%] | Viskosität 60 °C [mPa^{∗}s] | Viskosität 35 °C [mPa^{∗}s] | Viskosität 25 °C [mPa^{∗}s] | LagerStabilität 4 Monate 20 °C | LagerStabilität 4 Monate 60 °C |
|---|---|---|---|---|---|---|---|
| VII | Triethylphosphat | 10 | 560 | | | + / - | |
| VIII | Triethylphosphat | 5 | 640 | | | - | |
| IX | DBE - Dibasic Ester | 10 | 390 | 13120 | | -- | |
| X | DBE- Dibasic Ester | 5 | 580 | 16980 | | - | -- |
| XI | Benzylalkohol | 10 | 290 | 3920 | | - | -- |
| XII | Benzylalkohol | 5 | 490 | 10720 | 58880 | - | - |
| XIII | Diethylenglykol | 10 | 390 | 4400 | 16000 | ++ | ++ |
| XIV | Diethylenglykol | 5 | 540 | 9920 | 51200 | + | ++ |

| | | | | | | | |
|---|---|---|---|---|---|---|---|
| Nicht ausreichende Lagerstabilität: - (minus) Gute, ausreichende Lagerstabilität: + (plus) | | | | | | | |

Aus Tabelle 3 geht hervor, dass die Viskosität der erfindungsgemäßen Zusammensetzungen versetzt mit entsprechenden Lösungsmitteln (VII - XIV) auf dem gewünschten Niveau liegen, gleichzeitig aber auch, je nach Art und Konzentration des Lösungsmittels sowie der Lagertemperatur, gegebenenfalls eine überraschend ansprechende Lagerstabilität aufweisen. Diethylenglykol scheint hierbei das beste Lösungsmittel zu sein, wie in Tabelle 3 gezeigt wird. Aufgrund der Konsistenz der Proben war eine quantitative Analyse separierter Anteile nicht möglich, so dass eine Bestimmung des Kristallisationsgrades (Maß für Lagerstabilität) mittels visuellen Vergleichs der Proben untereinander erfolgte.

## Patentansprüche

1. Zusammensetzung enthaltend einen Novolak und Wasser, wobei
a) der prozentuale Anteil der ortho-Verknüpfungen der Phenolkerne des Novolaks größer ist als die der para-Verknüpfungen und
b) der Novolak hergestellt ist aus einer phenolischen Verbindung und einem Aldehyd in einem molaren Verhältnis von 1 : 0,2 bis 1 : 0,45 und
c) die Zusammensetzung 2 bis 20 Gew.% Wasser bezogen auf das Gewicht der Summe aus Novolak und Wasser enthält.

2. Zusammensetzung nach Anspruch 1, **dadurch gekennzeichnet, dass** die Zusammensetzung 2 bis 15 Gew.% Wasser bezogen auf das Gewicht der Summe aus Novolak und Wasser enthält.

3. Zusammensetzung nach Anspruch 2, **dadurch gekennzeichnet, dass** die Zusammensetzung 2 bis 9 Gew.% Wasser bezogen auf das Gewicht der Summe aus Novolak und Wasser enthält.

4. Zusammensetzung nach zumindest einem der vorhergehenden Ansprüche, **dadurch gekennzeichnet, dass** das molare Verhältnis der phenolischen Verbindung zum Aldehyd von 1 : 0,25 bis 1 : 0,4 beträgt.

5. Zusammensetzung nach zumindest einem der vorhergehenden Ansprüche, **dadurch gekennzeichnet, dass** die Zusammensetzung als weitere Komponente ein oder mehrere Lösungsmittel enthält.

6. Zusammensetzung nach Anspruch 5, **dadurch gekennzeichnet, dass** das Lösungsmittel ausgewählt ist aus, Triethylphosphat, Tris(2-chlorisopropyl)phosphat, Benzylalkohol, dibasische Ester, Diethylenglykol, und Ethylenglykol sowie weiteren Diolen oder Glykolethern und/oder Mischungen hiervon.

7. Zusammensetzung nach Anspruch 7, **dadurch gekennzeichnet, dass** das Lösungsmittel Diethylenglykol ist.

8. Zusammensetzung nach Anspruch 7, **dadurch gekennzeichnet, dass** das Lösungsmittel in einer Konzentration von 1 bis 10 Gew.% bezogen auf alle Komponente der Zusammensetzung enthalten ist.

9. Zusammensetzung nach zumindest einem der vorhergehenden Ansprüche, **dadurch gekennzeichnet, dass** die Zusammensetzung kein Schutzkolloid enthält.

10. Verfahren zur Herstellung einer Zusammensetzung enthaltend einen Novolak und Wasser folgende Schritte enthaltend:
a) Herstellung eines Novolaks bei dem der prozentuale Anteil der ortho-Verknüpfungen der Phenolkerne des Novolaks größer ist als die der para-Verknüpfungen durch Kondensation einer phenolischen Verbindung und einem Aldehyd in einem Verhältnis 1 : 0,2 bis 1: 0,45
b) Vermischen des unter a) hergestellten Kondensates mit 2 bis 20 Gew.% Wasser bezogen auf das Gewicht der Summe aus Novolak und Wasser bei Temperaturen zwischen 80 und 100 °C zur Herstellung der Zusammensetzung.

11. Verwendung der Zusammensetzung nach zumindest einem der Ansprüche 1 bis 9 zur Herstellung von Novolak-Polyolen.

12. Verwendung der Zusammensetzung nach Anspruch 11 zur Herstellung von Novolak-Polyolen durch Reaktion der Zusammensetzung mit Alkylenoxiden, wie z.B. Ethylenoxid, Propylenoxid, Butylenoxid und/oder Alkylencarbonaten, wie z.B. Ethylencarbonat, Propylencarbonat, Butylencarbonat, und/oder deren Mischungen.

13. Verwendung der Zusammensetzung nach zumindest einem der Ansprüche 1 bis 9 zur Herstellung von Polyurethanwerkstoffen.

14. Verwendung der Zusammensetzung nach Anspruch 13 zur Herstellung von Polyurethanschäumen.

15. Verwendung der Zusammensetzung nach zumindest einem der Ansprüche 1 bis 9 zur Herstellung von Beschichtungen, Lacken, Klebstoffen, Isolierstoffen, Bindemitteln, Laminaten, Schleifmaterialien, geformten Produkten und/oder feuerfesten Materialien.
